# FASCICULE DE BREVET EUROPEEN

(11) **EP 1 131 241 B1**
(45) Date de publication et mention de la délivrance du brevet: **12.02.2003**
(21) Numéro de dépôt: 99956087.3
(22) Date de dépôt: 19.11.1999
(51) Int. Cl.: B62D 65/00

(54) **DISPOSITIF DE MONTAGE ET DE MISE EN GEOMETRIE D'UNE AILE SUR LA STRUCTURE D'UN VEHICULE AUTOMOBILE**
MONTAGEVORRICHTUNG UND GEOMETRISCHE ANPASSUNG VON EINEM KOTFLÜGEL AN EINER KRAFTFAHRZEUGSTRUKTUR
DEVICE FOR MOUNTING AND POSITIONING A FENDER ON A MOTOR VEHICLE STRUCTURE

(30) Priorité: 20.11.1998 FR 9814623
(43) Date de publication de la demande: 12.09.2001
(73) Titulaire: Renault s.a.s., 92100 Boulogne Billancourt (FR)
(72) Inventeur: CASTEL, Philippe, F-78711 Mantes la Ville (FR); MEYNIER, Jean-Claude, F-78760 Ergal (FR); TETU, Yvon, F-92250 La Garenne Colombes (FR)
(86) Numéro de dépôt international: FR9902843
(87) Numéro de publication internationale: WO00030921

(56) Documents cités:
- GB-A- 2 075 437
- US-A- 4 779 336

## Description

La présente invention concerne un dispositif de montage et de mise en géométrie d'une l'aile sur la structure du véhicule.

Classiquement, les dispositifs pour le montage d'aile sur un véhicule automobile comportent des moyens de préhension saisissant l'aile pour l'amener sur la structure du véhicule avant son immobilisation par des éléments de fixation. Les moyens de préhension couramment utilisés sont alors des éléments support s'appliquant sur le bord inférieur de l'aile et des ventouses s'appliquant sur la face extérieure de l'aile, le plus souvent aux environs du centre de cette dernière, pour maintenir l'aile et assurer le positionnement global de l'aile sur la structure du véhicule.

Toutefois, de tels dispositifs, munis de moyens de préhension assurant le positionnement global de l'aile sur la structure du véhicule, sont sensibles aux éventuels défauts de forme de l'aile, tels qu'un vrillage de l'aile par exemple, qui conduisent à un mauvais positionnement des bords de l'aile vis à vis du capot et de la porte. Or, l'esthétique du véhicule et l'impression de qualité dégagées par le véhicule sont rapidement altérées par des jeux trop importants et/ou non réguliers entre les différentes pièces de carrosserie. Par ailleurs, les dispositifs précédemment décrits ne sont pas adaptés au montage d'ailes en matière plastique, telles qu'en NORYL, ces dernières ne présentant pas une rigidité suffisante pour conserver une forme stable lors de leur manipulation, le seul poids de la matière de l'aile engendrant un vrillage de l'aile lors de sa manipulation, nécessitant ainsi d'utiliser des dispositifs de montage assurant à la fois l'immobilisation de l'aile et la mise en géométrie du contour de l'aile avant sa fixation.

La présente invention a donc pour but de proposer un dispositif pour le montage d'une aile sur la structure d'un véhicule automobile qui assure la mise en géométrie de l'aile et en particulier le bon positionnement des bords de l'aile venant à proximité du capot et de la porte et qui soit simple et économique à réaliser.

L'invention a pour objet un dispositif de montage et de mise en géométrie d'une aile sur la structure d'un véhicule automobile comportant des moyens de positionnement de l'aile selon l'axe longitudinal X, l'axe transversal Y et l'axe vertical Z du véhicule.

Selon l'invention le dispositif pour la mise en géométrie est caractérisé en ce que les moyens de positionnement comportent des premiers moyens agissant sur la partie arrière de l'aile et assurant le positionnement du bord arrière de l'aile relativement au bord avant de la porte en vis à vis selon les trois axes X,Y,Z, et des seconds moyens assurant le positionnement du bord supérieur de l'aile selon l'axe transversal Y.

Selon une autre caractéristique du dispositif de mise en géométrie, les premiers moyens agissant sur la partie arrière de l'aile comportent au moins un doigt mobile selon l'axe X s'insérant dans un trou oblong calibré de la face arrière de l'aile, ce dernier s'étendant selon l'axe Y et possédant une largeur selon l'axe Z calibrée au diamètre du doigt mobile pour que l'insertion du doigt mobile à travers le trou oblong positionne le bord arrière de l'aile selon l'axe vertical Z.

Selon une autre caractéristique du dispositif mise. en géométrie, le doigt est muni d'une extrémité convergente et comporte un épaulement venant s'appliquer contre la face arrière de l'aile, lors du déplacement du doigt mobile, pour générer un effort de poussé sur l'aile en direction de la porte, des cales mobiles étant intercalées entre le bord arrière de l'aile et le bord avant de la porte pour fixer le jeu entre ces derniers selon l'axe longitudinal X.

Selon une autre caractéristique du dispositif de mise en géométrie, le doigt mobile est porté par un bras articulé s'engageant à l'intérieur de l'aile, le doigt mobile coopérant avec un élément poussoir s'appliquant contre la face arrière de l'aile pour pousser l'aile contre les cales mobiles.

Selon une autre caractéristique du dispositif de mise en géométrie, les premiers moyens de mise en position du bord arrière de l'aile comportent au moins une ventouse de préhension de l'aile venant s'appliquer sur la partie latérale arrière de l'aile et coopérant avec des butées d'appui pour positionner l'aile suivant l'axe transversal Y.

Selon une autre caractéristique du dispositif de mise en géométrie, lesdits premiers moyens sont portés par un bâti vertical mobile suivant les axes X,Y,Z, ce dernier étant muni d'un pion pilote coopérant avec un orifice ajusté de la porte pour positionner correctement le bâti vis à vis de la carrosserie du véhicule.

Selon une autre caractéristique du dispositif de mise en géométrie, le bâti comporte des moyens de préhension tels que des ventouses venant s'appliquer contre la surface de la porte et coopérant avec des butées d'appui pour positionner la porte parallèlement au côté de caisse.

Selon une autre caractéristique du dispositif de mise en géométrie, les seconds moyens comportent un doigt mobile selon l'axe Z venant s'engager dans un trou du bord supérieur de l'aile, le doigt assurant également un effort de traction suivant l'axe Y, en direction de l'intérieur du véhicule, pour appliquer l'aile contre des butées de guidage.

Selon une autre caractéristique du dispositif de mise en géométrie, les seconds moyens sont portés par un cadre s'étendant à la place du capot avant du véhicule, le cadre comportant un élément de liaison avec le bâti vertical permettant son positionnement précis suivant l'axe des X.

On comprendra mieux les buts, aspects et avantages de la présente invention, d'après la description présentée ci-après d'un mode de réalisation de l'invention, donné à titre d'exemple non limitatif, en se référant aux dessins annexés, dans lesquels :
- la figure 1 est une vue en perspective d'un mode de réalisation du dispositif de montage et de mise en géométrie selon l'invention ;
- la figure 2 est une vue de côté, de l'intérieur du véhicule, du dispositif de la figure 1 ;
- la figure 3 est une vue de côté agrandie du bâti supportant les moyens de mise en position du bord arrière de l'aile du dispositif de la figure 1 ;

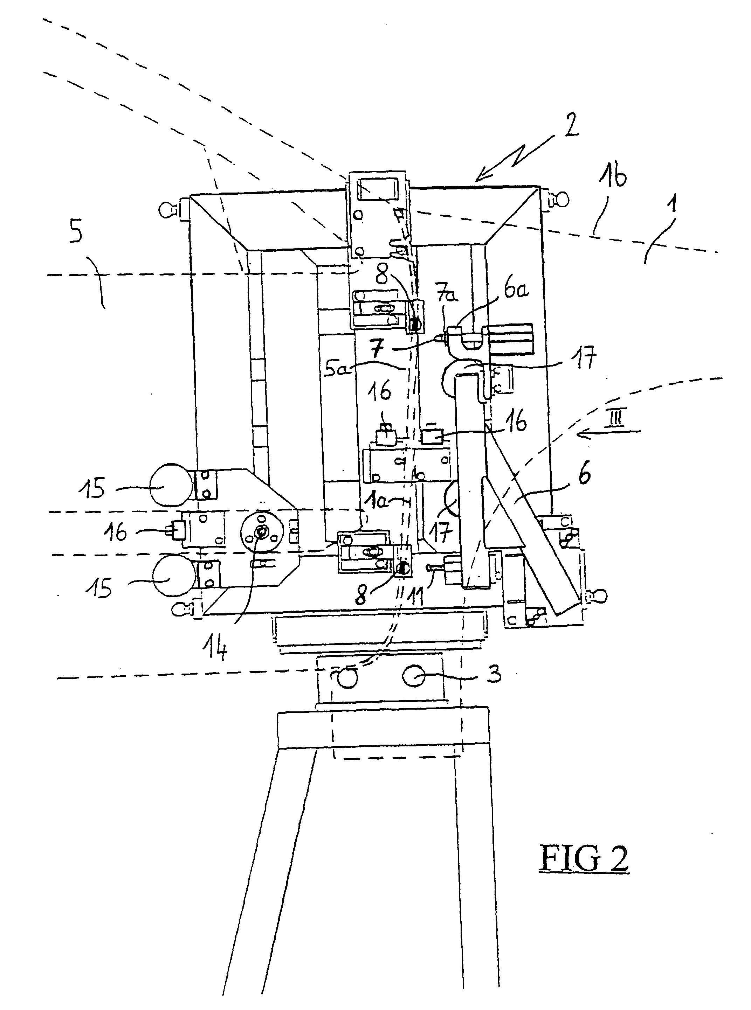

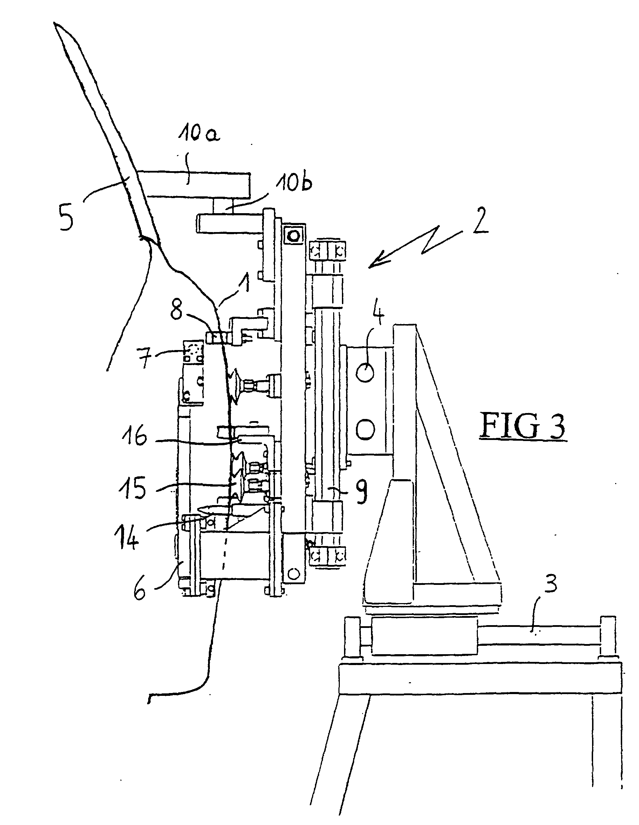

- la figure 3 est une vue selon la flèche III des moyens de mise en position représentés sur le dispositif de la figure 2 ;

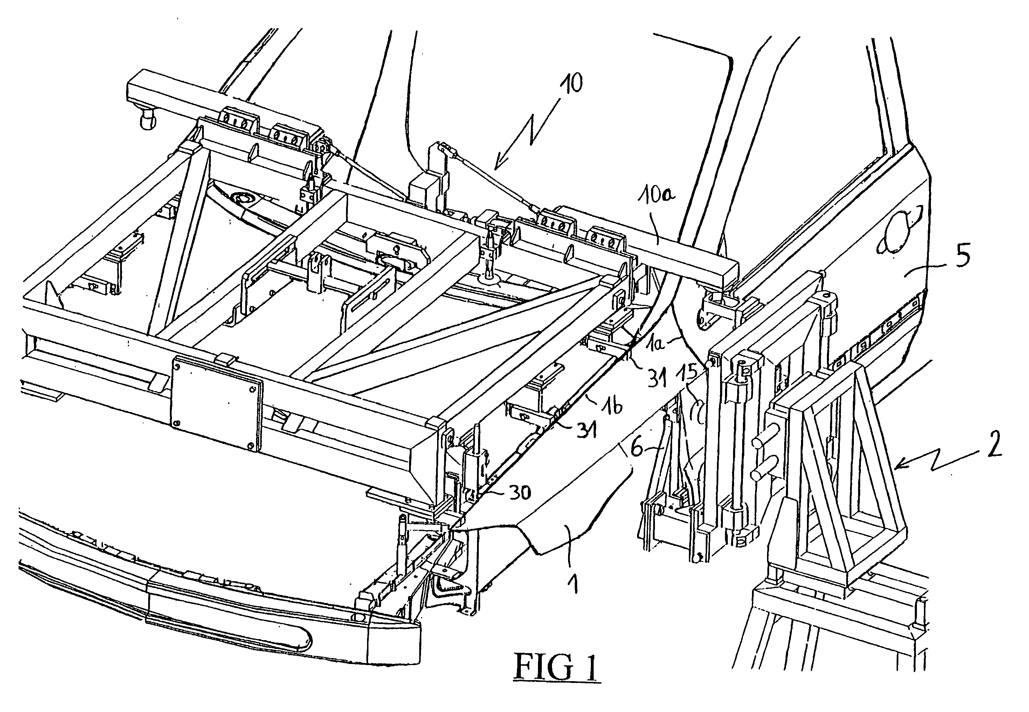

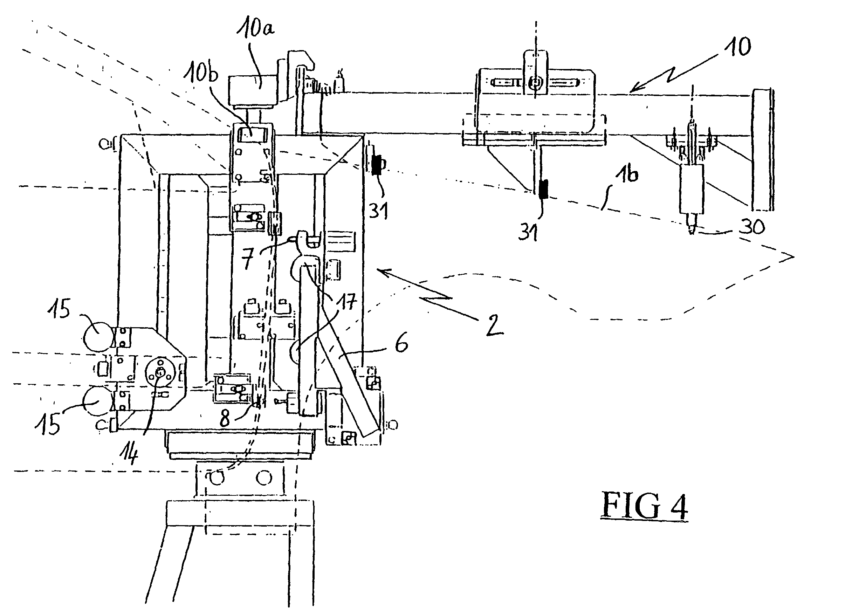

- la figure 4 est une vue de côté de l'ensemble des moyens de mise en géométrie du dispositif de montage de la figure 1.

Seuls les éléments nécessaires à la compréhension de l'invention ont été représentés. Pour faciliter la lecture des dessins les mêmes éléments portent les mêmes références d'une figure à l'autre.

La figure 1 représente un dispositif de montage et de mise en géométrie d'une aile 1 avant gauche sur la structure d'un véhicule automobile équipé de ses portes 5. Le dispositif comporte un bâti vertical 2 assurant le positionnement du bord arrière 1a de l'aile 1 par rapport à la porte 5, et un cadre 10 s'étendant à la place du capot avant du véhicule et assurant le positionnement du bord supérieur 1b de l'aile 1.

Le bâti vertical 2 présente une glissière 3 orientée selon l'axe transversal Y du véhicule, une glissière 4 orientée selon l'axe longitudinal X du véhicule et une glissière 9 orientée selon l'axe vertical Z du véhicule, ces trois glissières 3, 4 et 9 permettant le déplacement dans l'espace du bâti vertical 2 vis-à-vis de la structure du véhicule.

Comme on peut le voir plus précisément sur la figure 2, dans laquelle la carrosserie est représentée schématiquement de façon transparente, le bâti vertical 2 est muni de moyens établissant le positionnement du bâti 2 vis-à-vis de la porte 5. Ces moyens sont constitués d'un pion pilote 14 venant s'insérer dans un trou calibré de la porte 5 et établissant le positionnement, selon les axes longitudinal X et vertical Z, du bâti 2 vis-à-vis de la porte 5. Avantageusement, le trou calibré est disposé au niveau du bandeau de protection de porte afin d'être caché lorsque le bandeau de protection est mis en place. Le bâti vertical 2 est également muni de deux ventouses 15 venant s'appliquer contre la surface extérieure de la porte 5 et attirant cette dernière contre deux butées transversales 16 limitant le déplacement de la porte 5 selon l'axe transversal Y.

Conformément aux figures 2 et 3, le bâti vertical 2 comporte un bras articulé 6 venant s'engager à l'intérieur de l'aile 1 et supportant, dans sa partie supérieure, un doigt 7 mobile selon l'axe longitudinal X du véhicule. Le doigt mobile 7 est entraîné pneumatiquement au travers d'un support de guidage 6a et comporte une extrémité convergente destinée à s'insérer dans un trou oblong de la face arrière de l'aile 1, ce dernier possédant une largeur selon l'axe vertical Z calibrée au diamètre du doigt mobile 7 et s'étendant plus largement selon l'axe transversal Y.

Le doigt mobile 7 comporte, à proximité de son extrémité, un épaulement 7a destiné à venir en appui contre la face arrière de l'aile 1 de façon à provoquer le déplacement de l'aile 1 en direction de la porte lors de l'insertion du doigt 7. Le bras articulé 6 est également muni, dans sa partie inférieure, d'un vérin 11 coulissant pneumatiquement selon l'axe X et venant s'appuyer contre la face arrière de l'aile 1, simultanément au déplacement du doigt mobile 7, pour pousser l'aile 1 en direction de la porte 5.

Pour établir un jeu correct, selon l'axe X, entre l'aile 1 et la porte 5, le bâti vertical 2 est muni de deux cales 8 mobiles venant s'interposer entre la porte 5 et l'aile 1 à hauteur du doigt mobile 7 et du vérin 11. Ces cales 8 coulissent selon l'axe longitudinal X et sont munies de ressort de rappel les éloignant légèrement, en position de repos, du bord avant Sa de la porte 5 de façon à faciliter la mise en place initiale du bâti vertical 2 contre la porte 5.

Le bras articulé 6 comporte également deux ventouses 17 s'appliquant contre la face extérieure de l'aile 1 et maintenant celle-ci contre une butée transversale 16 limitant le déplacement selon Y de l'aile 1.

Comme on peut le voir plus précisément sur la figure 4, le dispositif de mise en géométrie comporte également un cadre 10 venant se rattacher au bâti vertical 2 et s'étendant à la place du capot avant du véhicule. Le cadre 10 est relié au bâti vertical 2 au moyen d'un bras de liaison 10a muni d'une rotule 10b s'insérant dans un trou adapté du bâti vertical 2. Pour effectuer la mise en géométrie du bord supérieur 1b de l'aile 1, le cadre 10 comporte un doigt mobile 30 s'engageant verticalement dans un trou calibré du bord supérieur 1b de l'aile 1, ce dernier étant disposé à proximité de l'extrémité avant de l'aile 1. Le doigt mobile 30 se déplace également selon l'axe transversal Y, de manière à générer une force de traction sur l'aile 1 en direction de l'intérieur du véhicule pour appliquer le bord supérieur 1b de l'aile 1 contre deux butées de guidage 31 portées par le cadre 10 et disposées le long du bord supérieur 1a de l'aile 1.

Le fonctionnement du dispositif de montage et de mise en géométrie de l'aile 1 va maintenant être expliqué. Le véhicule arrive au niveau du poste de mise en géométrie des ailes 1 en étant prééquipé de ses ailes 1 et de ses portes 5. Au niveau de ce poste, les éléments de fixation des ailes 1 ne sont pas encore serrés, permettant ainsi le mouvement de l'aile 1 par rapport à la structure du véhicule, et les dispositifs de serrures des portes 5 ne sont pas montés, laissant ces dernières pivoter librement sur leurs charnières portées par le pied avant de la structure du véhicule.

Un opérateur approche alors le bâti vertical 2 du véhicule et engage le pion pilote 14 à travers le trou calibré de la porte 5, en maintenant volontairement le bord 1a de l'aile 1 écarté du bord 5a de la porte 5 de manière à faciliter l'insertion des cales 8 entre ces derniers. Une fois le pion pilote 14 engagé, l'opérateur pousse le bâti 2 en direction du véhicule ce qui provoque simultanément l'entrée en contact des ventouses 17 sur l'aile 1 et des ventouses 15 sur la porte 5, qui soumises au vide d'air attirent respectivement la porte 5 et l'aile 1 contre les butées transversales 16.

La porte 5 et l'aile 1 étant alors parfaitement alignées dans le plan du côté de caisse, le bras articulé 6 est engagé de manière automatique derrière l'aile 1 et le doigt mobile 7 est déplacé en direction de la porte 5 pour coopérer à travers le trou oblong de la face arrière de l'aile 1. L'insertion du doigt mobile 7 à travers le trou oblong calibré provoque alors le positionnement précis de l'aile 1 par rapport à la porte 5, selon l'axe vertical Z, et génère un effort en direction de la porte 5, lorsque l'épaulement 7a arrive au contact de la face arrière de l'aile 1, qui déplace l'aile 1 en direction de la porte 5 et entraîne son bord arrière 1a contre les cales 8, ces dernières coulissant jusqu'à venir au contact du bord avant 5a de la porte 5. Ce déplacement longitudinal de l'aile 1 en direction de la porte 5 est également assuré par la poussée simultanée du vérin 11 au niveau de la cale 8 inférieure. L'aile 1 est alors parfaitement positionnée selon l'axe longitudinal X, le jeu fonctionnel séparant le bord 5a de la porte 5 du bord 1a de l'aile 1 étant fixé par l'épaisseur des cales 8.

Le cadre 10 est ensuite amené à la place du capot avant en insérant la rotule 10b dans le trou adapté du bati vertical 2 et le doigt mobile 30 est inséré automatiquement dans le trou calibré du bord supérieur 1b de l'aile 1. Le doigt mobile 30 est alors légèrement déplacé suivant l'axe Y, en direction de l'intérieur du véhicule pour appliquer le bord supérieur de l'aile 1 contre les butées 30.

Le bord arrière 1a et le bord supérieur 1b de l'aile 1 étant parfaitement positionnés, les différentes vis de fixation réparties le long de ces bords 1a, 1b, non représentées, sont alors vissés de manière à immobiliser l'aile 1 en position. Avantageusement dans le cas de la mise en géométrie d'une aile en matière plastique, telle que du NORYL, le bord supérieur 1b de l'aile est immobilisé au moyen d'agrafes de fixation bloquant l'aile 1 selon l'axe transversal Y mais autorisant la dilatation de l'aile 1 selon l'axe longitudinal X.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif de montage et de mise en géométrie d'une aile (1) sur la structure d'un véhicule automobile comportant des moyens de positionnement de l'aile (1) selon l'axe longitudinal X, l'axe transversal Y et l'axe vertical Z du véhicule, **caractérisé en ce que** lesdits moyens de positionnement comportent des premiers moyens agissant sur la partie arrière de l'aile (1) et assurant le positionnement du bord arrière (1a) de l'aile (1) relativement au bord avant (5a) de la porte (5) en vis à vis selon les trois axes X,Y,Z, et des seconds moyens assurant le positionnement du bord supérieur (1b) de l'aile (1) selon l'axe transversal Y.

2. Dispositif de montage et de mise en géométrie d'une aile (1) selon la revendication 1, **caractérisé en ce que** les premiers moyens agissant sur la partie arrière de l'aile (1) comportent au moins un doigt mobile (7) selon l'axe X s'insérant dans un trou oblong calibré de la face arrière de l'aile (1), ledit trou oblong s'étendant selon l'axe Y et possédant une largeur selon l'axe Z calibrée au diamètre du doigt mobile (7) afin que l'insertion dudit doigt mobile (7) à travers le trou oblong positionne le bord arrière (1a) de l'aile (1) selon l'axe vertical Z.

3. Dispositif de montage et de mise en géométrie d'une aile (1) selon la revendication 2, **caractérisé en ce que** ledit doigt mobile (7) est muni d'une extrémité convergente et comporte un épaulement venant s'appliquer contre la face arrière de l'aile pour générer un effort de poussée sur l'aile (1) en direction de la porte (5), des cales (8) mobiles selon l'axe X étant intercalées entre le bord arrière (1a) de l'aile (1) et le bord avant (5a) de la porte (5) pour fixer le jeu séparant le bord arrière (1a) de l'aile (1) du bord avant (5a) de la porte (5).

4. Dispositif de montage et de mise en géométrie d'une aile (1) selon la revendication 3, **caractérisé en ce que** le doigt mobile (7) est porté par un bras articulé (6) s'engageant à l'intérieur de l'aile (1), ledit doigt mobile (7) coopérant avec un élément poussoir (11) s'appliquant contre la face arrière de l'aile pour pousser l'aile (1) contre les cales (8).

5. Dispositif de montage et de mise en géométrie d'une aile (1) selon l'une quelconque des revendications 1 à 4, **caractérisé en ce que** lesdits premiers moyens de mise en position du bord arrière (1a) de l'aile (1) comportent au moins une ventouse (17) de préhension de l'aile (1) venant s'appliquer sur la partie latérale arrière de l'aile (1) et coopérant avec des butées d'appui (16) pour positionner l'aile (1) suivant l'axe transversal Y.

6. Dispositif de montage et de mise en géométrie d'une aile (1) selon l'une quelconque des revendications 1 à 5, **caractérisé en ce que** lesdits premiers moyens sont portés par un bâti vertical (2) mobile suivant les axes X,Y,Z, ledit bâti vertical (2) étant muni d'un pion pilote (14) coopérant avec un orifice ajusté de la porte (5) pour positionner correctement le bâti (2) vis à vis de la porte (5) du véhicule.

7. Dispositif de montage et de mise en géométrie d'une aile (1) selon la revendication 6, **caractérisé en ce que** ledit bâtit (2) comporte des moyens de préhension tels que des ventouses (15) venant s'appliquer contre la surface de la porte (5) et coopérant avec des butées d'appui (16) pour positionner ladite porte (5) parallèlement au côté de caisse.

8. Dispositif de montage et de mise en géométrie d'une aile (1) selon l'une quelconque des revendications 1 à 7, **caractérisé en ce que** lesdits seconds moyens comportent un doigt mobile (30) selon l'axe Z venant s'engager dans un trou du bord supérieur (1b) de l'aile (1), ledit doigt mobile (30) assurant un effort de traction suivant l'axe Y, en direction de l'intérieur du véhicule, pour appliquer le bord supérieur (1b) de l'aile (1) contre des butées de guidage (31).

9. Dispositif de montage et de mise en géométrie d'une aile selon la revendication 8, **caractérisé en ce que** lesdits second moyens sont portés par un cadre (10) s'étendant à la place du capot avant du véhicule, ledit cadre (10) comportant un élément de liaison (10b) avec le bâti vertical (2) permettant son positionnement précis suivant l'axe des X.

## Claims

1. , Device for mounting and alignment of a wing (1) on the structure of an automotive vehicle comprising means for positioning the wing (1) according to the longitudinal axis X, the transverse axis Y and the vertical axis Z, **characterised in that** said positioning means comprise first means acting upon the rear part of the wing (1) and providing positioning of the rear edge (1a) of the wing (1) relative to the front edge (5a) of the door (5) facing it in accordance with the three axes X, Y, Z, and second means providing positioning of the upper edge (1b) of the wing (1) according to the transverse axis Y.

2. Device for mounting and alignment of a wing (1) according to claim 1, **characterised in that** the first means acting on the rear part of the wing (1) comprise at least one finger (7) moveable according to the X axis, going into a calibrated oblong aperture on the rear face of the wing (1), said oblong aperture extending according to the Y axis and having a width according to the Z axis calibrated to the diameter of the moveable finger (7) so that the insertion of said moveable finger (7) through the oblong aperture positions the rear edge (1a) of the wing (1) according to the vertical axis Z.

3. Device for mounting and alignment of a wing (1) according to claim 2, **characterised in that** said moveable finger (7) is equipped with a tapering end and comprises a shoulder that is applied against the rear face of the wing when the moveable finger is displaced in order to generate a pushing force upon the wing (1) in the direction of the door (5), shims (8) moveable according to the X axis being interposed between the rear edge (1a) of the wing (1) and the front edge (5a) of the door (5) in order to fix the clearance separating the rear edge (1a) of the wing (1) of the front edge (5a) of the door (5).

4. Device for mounting and alignment of a wing (1) according to claim 3, **characterised in that** the moveable finger (7) is carried by an articulated arm (6) engaging with the interior of the wing (1), said moveable finger (7) cooperating with a pushing element (11) applied against the rear face of the wing in order to push the wing (1) against the shims (8).

5. Device for mounting and alignment of a wing (1) according to any one of claims 1 to 4, **characterised in that** said first means for positioning the rear edge (1a) of the wing (1) comprise at least one suction cup (17) for gripping the wing (1) that is to be applied to the rear lateral part of the wing (1) and cooperating with thrust stops (16) in order to position the wing (1) according to the transverse axis Y.

6. Device for mounting and alignment of a wing (1) according to any one of claims 1 to 5, **characterised in that** said first means are carried by a vertical supporting structure (2) moveable according to the axes X, Y, Z, said vertical supporting structure (2) being provided with a pilot guide pin (14) cooperating with a calibrated orifice in the door (5) to correctly position the supporting structure (2) with respect to the door (5) of the vehicle.

7. Device for mounting and alignment of a wing (1) according to claim 6, **characterised in that** said supporting structure (2) comprises gripping means such as suction cups (15) that are applied against the surface of the door (5) and cooperating with thrust stops (16) in order to position said door (5) parallel to the side of the body.

8. Device for mounting and alignment of a wing (1) according to any one of claims 1 to 7, **characterised in that** said second means comprise a finger (30) moveable according to the Z axis, engaging in an aperture in the upper edge (1b) of the wing (1), said moveable finger (30) also providing a traction force according to the Y axis, in the direction of the interior of the vehicle, in order to apply the upper edge (1b) of the wing (1) against the guide stops (31).

9. Device for mounting and alignment of a wing according to claim 8, **characterised in that** said second means are carried by a frame (10) extending in place of the front bonnet of the vehicle, the frame (10) comprising an element (10b) connecting with the vertical supporting structure (2) allowing its precise positioning according to the X axis.

## Patentansprüche

1. Vorrichtung zum Einbau und zur Ausrichtung eines Kotflügels (1) in den Aufbau eines Kraftfahrzeugs, die eine Anordnung aufweist zur Positionierung des Kotflügels (1) entlang der Längsachse X, der Querachse Y und der senkrechten Achse Z des Fahrzeugs, **dadurch gekennzeichnet, dass** die Anordnung zur Positionierung eine erste Anordnung aufweist, die auf den rückwärtigen Teil des Kotflügels (1) einwirkt und die Positionierung des rückwärtigen Randes (1a) des Kotflügels (1) relativ zum vorderen Rand (5a) der gegenüberliegenden Tür (5) entlang der drei Achsen X, Y, Z gewährleistet, sowie eine zweite Anordnung aufweist, die die Positionierung des oberen Randes (1b) des Kotflügels (1) entlang der Querachse Y gewährleistet.

2. Vorrichtung zum Einbau und zur Ausrichtung eines Kotflügels (1) nach Anspruch 1, **dadurch gekennzeichnet, dass** die erste Anordnung, die auf den rückwärtigen Teil des Kotflügels (1) einwirkt, wenigstens einen entlang der X-Achse beweglichen Stift (7) aufweist, der in eine langgestreckte angepasste Öffnung eingreift, die in der rückwärtigen Seite des Kotflügels (1) eingearbeitet ist, wobei die langgestreckte Öffnung sich in Richtung der Y-Achse erstreckt und eine Breite entlang der Z-Achse aufweist, die an den Durchmesser des beweglichen Stiftes (7) angepasst ist, sodass nach dem Eingreifen des beweglichen Stiftes (7) in die langgestreckte Öffnung der rückwärtige Rand (1a) des Kotflügels (1) entlang der Z-Achse positioniert wird.

3. Vorrichtung zum Einbau und zur Ausrichtung eines Kotflügels (1) nach Anspruch 2, **dadurch gekennzeichnet, dass** der bewegliche Stift (7) mit einem konvergierenden Ende versehen ist und eine Schulter aufweist, die an der rückwärtigen Seite des Kotflügels zum Anschlag kommt um den Kotflügel (1) in Richtung zur Tür (5) hin mit einer Druckkraft zu beaufschlagen, wobei entlang der X-Achse bewegliche Keile (8) zwischen dem rückwärtigen Rand (1a des Kotflügels (1) und dem vorderen Rand (5a) der Tür (5) eingesetzt sind, sodass der Spalt, der den rückwärtigen Rand (1a) des Kotflügels (1) vom vorderen Rand (5a) der Tür (5) trennt, festgelegt ist.

4. Vorrichtung zum Einbau und zur Ausrichtung eines Kotflügels (1) nach Anspruch 3, **dadurch gekennzeichnet, dass** der bewegliche Stift (7) von einem Gelenkarm (6) getragen wird, der in das Innere des Kotflügels (1) eingreift, wobei der bewegliche Stift (7) mit einem Andruckteil (11) zusammenwirkt, das an der rückwärtigen Seite des Kotflügels ansetzt um den Kotflügel (1) an die Keile (8) anzudrücken.

5. Vorrichtung zum Einbau und zur Ausrichtung eines Kotflügels (1) nach einem der Ansprüche 1 bis 4, **dadurch gekennzeichnet, dass** die erste Anordnung zur Positionierung des rückwärtigen Randes (1a) des Kotflügels (1) wenigstens einen Saugnapf (17) zum Ergreifen des Kotflügels (1) aufweist, der am seitlichen rückwärtigen Abschnitt des Kotflügels (1) ansetzt und der mit Stützanschlägen (16) zusammenwirkt zur Positionierung des Kotflügels (1) in der Querachse Y.

6. Vorrichtung zum Einbau und zur Ausrichtung eines Kotflügels (1) nach einem der Ansprüche 1 bis 5, **dadurch gekennzeichnet, dass** die erste Anordnung auf einem senkrechten Gestell (2) angeordnet ist, das entlang der Achsen X, Y, Z beweglich ist, wobei das senkrechte Gestell (2) mit einem Steuerzapfen (14) versehen ist, der mit einer angepassten Öffnung in der Tür (5) zusammenwirkt zur korrekten Positionierung des Gestells (2) gegenüber der Tür (5) des Fahrzeugs.

7. Vorrichtung zum Einbau und zur Ausrichtung eines Kotflügels (1) nach Anspruch 6, **dadurch gekennzeichnet, dass** das Gestell (2) eine Greifanordnung aufweist, wie zum Beispiel Saugnäpfe (15), die an der Oberfläche der Tür (5) ansetzen und die mit Stützanschlägen (16) zusammenwirken um die Tür (5) parallel zur Seite des Aufbaus zu positionieren.

8. Vorrichtung zum Einbau und zur Ausrichtung eines Kotflügels (1) nach einem der Ansprüche 1 bis 7, **dadurch gekennzeichnet, dass** die zweite Anordnung einen entlang der Z-Achse beweglichen Stift ( 30) aufweist, der in eine Öffnung im oberen Rand (1b) des Kotflügels (1) eingreift, wobei der Stift (30) eine Zugkraft entlang der Y-Achse in Richtung zum Inneren des Fahrzeugs hin ausübt um den oberen Rand (1b) des Kotflügels (1) an die Führungsanschläge (31) anzudrücken.

9. Vorrichtung zum Einbau und zur Ausrichtung eines Kotflügels nach Anspruch 8, **dadurch gekennzeichnet, dass** die zweite Anordnung von einem Rahmen (10) getragen wird, der an Stelle der vorderen Motorhaube des Fahrzeugs eingesetzt ist, wobei der Rahmen (10) ein Verbindungsteil (10b) mit dem senkrechten Gestell (2) aufweist, das seine genaue Positionierung entlang der X-Achse ermöglicht.
